# EUROPEAN PATENT APPLICATION

(11) **EP 4 534 318 A1**
(43) Date of publication of application: **09.04.2025**
(21) Application number: 24203517.8
(22) Date of filing: 30.09.2024
(51) Int. Cl.: B60K 17/346, F16H 57/033, F16H 48/24, F16H 48/32, B60K 17/36

(54) **IMPROVED TORQUE DISTRIBUTOR SYSTEM AMONG AXLES OF A HEAVY VEHICLE**

(30) Priority: 02.10.2023 IT 202300020277
(71) Applicant: IVECO S.P.A., 10156 Torino (IT)
(72) Inventor: PEREIRA DE LEMOS, Josè Francivaldo, 10156 TORINO (IT); SANTARELLI, Livio, 10156 TORINO (IT)
(74) Representative: Studio Torta S.p.A.

(57) **Abstract**

Torque distributor system (5) for distributing the torque coming from a powertrain (1) of a vehicle to a plurality of axles (2a, 2b, 2c, 2d) of the vehicle, comprising a casing (6) designed to define a space (7) configured to house a transmission (8), the casing (6) defining a plurality of openings (9, 10, 11, 12, 13, 14) configured to house respective power take-offs (15, 16, 17, 18, 19, 20) connected to one another by the transmission (8), a first power take-off (15) of the power take-offs (15, 16, 17, 18, 19, 20) being able to be connected to the powertrain (1) and at least a second one (19) of the power take-offs (15, 16, 17, 18, 19, 20) being able to be connected to one or more of the axles (2a, 2b, 2c, 2d), the power take-offs (15, 16, 17, 18) being operatively connected to one another by a first and by a second differential mechanism (26, 36).

## Description

### CROSS-REFERENCE TO RELATED APPLICATIONS

This patent application claims priority from Italian patent application no. 102023000020277 filed on October 2, 2023, the entire disclosure of which is incorporated herein by reference.

### TECHNICAL FIELD

The invention relates to a torque distributor system for a heavy vehicle.

The invention has a preferred, though non-exclusive application in the distribution of torque among axles of a heavy vehicle such as a truck. Hereinafter reference will be made to this application by mere way of example.

### KNOWN STATE OF THE ART

Heavy vehicles comprise, as it is known, a powertrain assembly configured to provide torque to one or more axles of the vehicle. An example of such a powertrain assembly can be an internal combustion engine, a fuel cell motor or an electric or hybrid motor assembly.

In particular, the torque is distributed by means of a transmission to said one or more axles of the vehicle, as it is known. However, the transmission is specifically designed for one single traction configuration.

Hence, in case of need to change the traction mode from single axis or multiple axes, the transmission must be redesigned.

Furthermore, current transmissions are particularly bulky and heavy, if they need to split the torque to a plurality of axles.

Therefore, there is a need to provide a system for distributing torque from a powertrain of a vehicle to one or more axles, which is versatile, compact and economic.

The object of the invention is to fulfil the needs discussed above in an optimized and economic fashion.

### SUMMARY OF THE INVENTION

The aforesaid object is reached by a torque distributor system as claimed in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic view of a powertrain system for a heavy vehicle used in a configuration with two driving axles;
- figure 2 is a cross-section view of a distributor system according to a first embodiment of the invention in the configuration of figure 1;
- figure 3 is a cross-section view of a distributor system according to a second embodiment of the invention in the configuration of figure 1;
- figure 4 is a schematic view of a powertrain system for a heavy vehicle used in a configuration with three driving axles;
- figure 5 is a cross-section view of a distributor system according to a first embodiment of the invention in the configuration of figure 4;
- figure 6 is a cross-section view of a distributor system according to a second embodiment of the invention in the configuration of figure 4;
- figure 7 is a schematic view of a powertrain system for a heavy vehicle used in a configuration with three driving axles;
- figure 8 is a cross-section view of a distributor system according to a first embodiment of the invention in the configuration of figure 7; and
- figure 9 is a cross-section view of a distributor system according to a second embodiment of the invention in the configuration of figure 7.

### DETAILED DESCRIPTION OF THE INVENTION

The accompanying figures schematically show a powertrain assembly 1 configured to transmit torque, through a mechanical chain, to a plurality of axles 2a, 2b, 2c and 2d of a heavy vehicle (not shown), such as a tractor or a truck.

The powertrain assembly 1 can be an internal combustion engine, a fuel cell system or a hybrid traction system as known in the art.

The powertrain assembly 1 is connected to at least one axle by means of a transmission 3, designed to select a specific gearbox, a plurality of rotating shafts 4a, 4b, 4c, 4d and a torque distribution system 5 according to the invention.

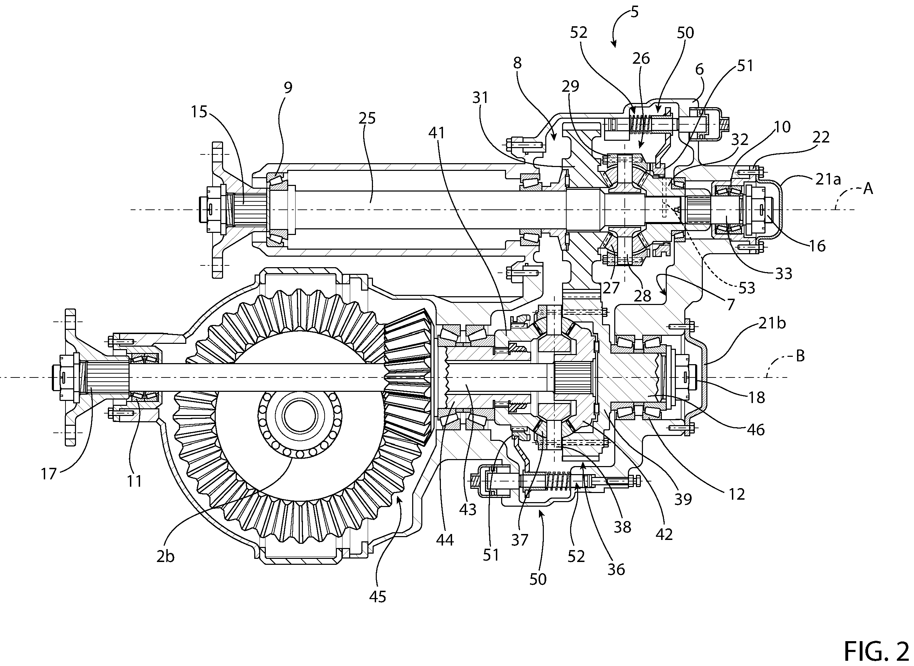

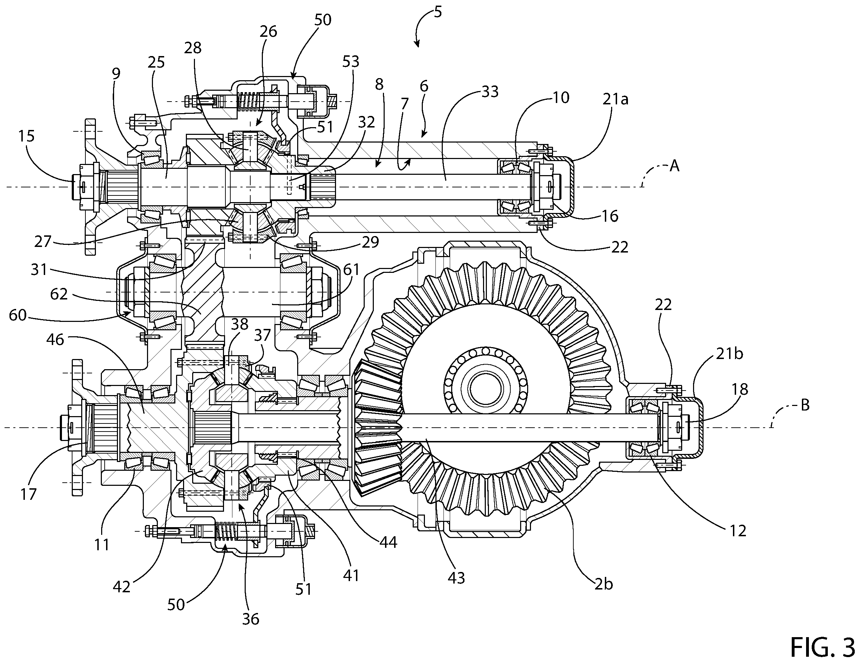

Figures 2 and 3 show a configuration with two driving axles 4a, 4b, wherein the torque distributor 5 is connected by a first rotating shaft 4a to the powertrain assembly 1, in the case described herein by means of the transmission 3, and wherein a first axle 2a is connected by a second rotating shaft 4b.

In both embodiments, the torque distributor 5 comprises a casing 6 designed to be supported by a portion fixed to the vehicle frame (not shown) defining a space 7 and a transmission assembly 8 housed inside the space 7.

Clearly, the casing 6 advantageously consists of several parts rigidly connected to one another in order to allow the transmission assembly 8 to be assembled in the space 7.

The casing 6 defines a plurality of openings 9, 10, 11, 12 configured to allow for the passage of respective power take-offs 15, 16, 17, 18, as better described below, connected to one another by the transmission 8.

More in detail, the distributor system 5 defines four openings and respective power take-offs, preferably coaxial to one another two by two. In particular, the first and the second opening 9, 10 and the first and the second power take-off 15, 16 are coaxial to an axis A, whereas the third and the fourth opening 11, 12 and the third and the fourth power take-off 17, 18 are coaxial to an axis B.

Advantageously, the axes A and B are parallel to one another and, even more preferably, are parallel to a longitudinal axis of the vehicle.

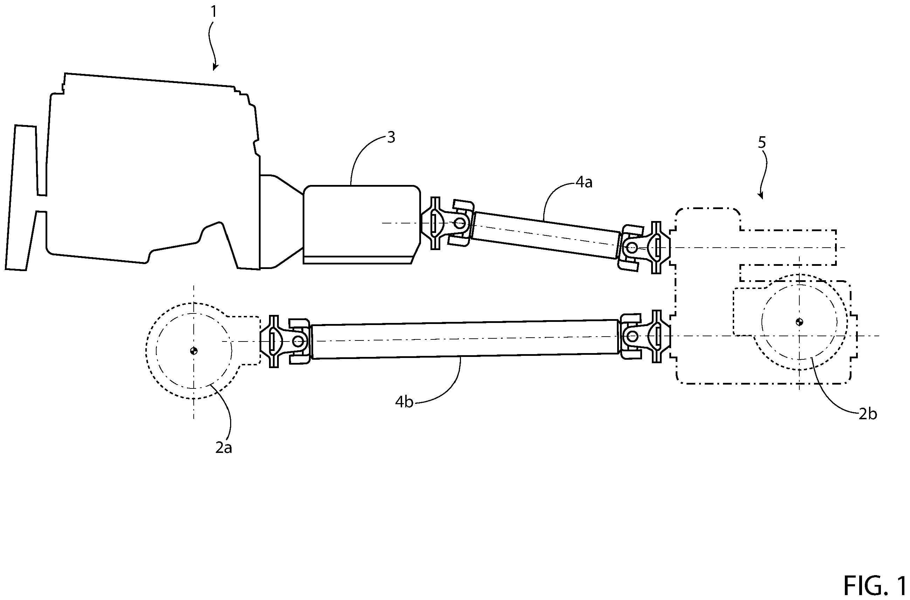

In the embodiment of figures 2 and 3, corresponding to the embodiment of figure 1, where there are two traction axles, two power take-offs 15, 17 communicate with the external environment, whereas two power take-offs 16, 18 are separated from the external environment by means of covers 21a, 21b fixed to the casing 6 by means of connection means 22, such as threaded elements.

In particular, in the configuration described herein, the rotating shaft 4a is connected to the power take-off 15 and the power take-off 17 is connected to the axle 2a and to the axle 2b, as described below, by means of the transmission 8.

According to the embodiment of figure 2, the transmission 8 comprises a first support shaft 25 connected to the first power take-off 15 in an integral manner. The first support shaft 25 is connected to the second power take-off 16 by means of a first differential mechanism 26.

In particular, the first differential mechanism 26 comprises a plurality of satellites 27 carried by respective pins 28 integral to the first support shaft 25 and connected by a train carrier 29.

In particular, the satellites 27 mesh with a first toothed wheel 31 and with a second toothed wheel 32. The second toothed wheel 32 is carried by the first support shaft 25 so as to freely rotate on it and is connected to a second support shaft 33 that can rigidly be connected to the second power take-off 16.

The first toothed wheel 31 is carried by the first support shaft 25 so as to freely rotate and is operatively connected to the third power take-off 17 by means of a second differential mechanism 36 and to the fourth power take-off 18.

In detail, the second differential mechanism 36 comprises a train carrier 39, which is rigidly connected to pins 38 supporting the satellites 37 in a rotary manner and is connected to the first toothed wheel 31 by means of a toothed coupling thereto.

The satellites 37 mesh with a first toothed wheel 41 and with a second toothed wheel 42. The second toothed wheel 42 is rigidly supported by a third support shaft 43 rigidly connected to the third power take-off 17, whereas the first toothed wheel is rigidly carried by a fourth support shaft 44 operatively connected to the second axle 2b, for example by means of a gear 45.

In particular, the fourth support shaft 44 is carried coaxial to and around the third support shaft 43.

The train carrier 39 is rigidly connected to a fifth support shaft 46 rigidly connected to the fourth power take-off 18.

With reference to figure 2, the first support shaft 25 extends along the axis A to a greater extent than the second support shaft 33 and stretches above the second axle 2b on both sides.

As a result of this arrangement, the second and the fourth power take-off 16, 18 are located on the same side of the axle 2b, the third power take-off 17 is located on the opposite side of the axle 2b, whereas the first power take-off 15 is located substantially above the axle 2b.

The transmission 8 further comprises blocking means 50 configured to block the first and/or second differential mechanism 26, 36. In particular, the blocking means 50 are housed in the space 7.

In particular, the blocking means 50 comprise a sleeve 51, which is operated by actuator means 52 and is configured to cooperate in contact with an element of the differential 26, 36 in order to block the function thereof, i.e. to cause each element thereof to rotate at the same speed.

In the embodiment shown herein, the blocking means 50 for the first differential mechanism 36 comprise a sleeve 51, which can be moved so as to assumed a a first condition, in which it does not cooperate with the train carrier 29, and a second condition, in which it cooperates with the train carrier 29 so as to make it selectively integral to the second toothed wheel 32.

On the other hand, the blocking means 50 for the second differential mechanism 36 comprise a sleeve 51, which can be moved so as to assume a first condition, in which it does not cooperate with the train carrier 39, and a second condition, in which it cooperates with the train carrier 39 so as to make it selectively integral to the second toothed wheel 42.

The actuator means 52 shown herein advantageously are pneumatic, i.e. they comprise a compressed-air operated piston, which is held in the position of release of the differential by elastic means, which are not further described for the sake of brevity and are not shown in the drawings. In particular, the elastic means are configured to keep the sleeve 51 in the condition of non-engagement with the relative aforementioned element of the first or second differential 26, 36.

In particular, in this configuration, the first differential 26 is held in a blocked configuration by means of a blocking screw 53.

According to the embodiment of figure 3, the transmission 8 comprises a first support shaft 25 connected to the first power take-off 15 in an integral manner. The first support shaft 25 is connected to the second power take-off 16 by means of a first differential mechanism 26.

In particular, the first differential mechanism 26 comprises a plurality of satellites 27 carried by respective pins 28 integral to the first support shaft 25 and connected by a train carrier 29.

In particular, the satellites 27 mesh with a first toothed wheel 31 and with a second toothed wheel 32. The second toothed wheel 32 is carried by the first support shaft 25 so as to freely rotate on it and is connected to a second support shaft 33 that can rigidly be connected to the second power take-off 16.

The first toothed wheel 31 is carried by the first support shaft 25 so as to freely rotate and is operatively connected to the third power take-off 17 by means of a gearing 60 and, by means of said gearing 60 and of a second differential mechanism 36, to the fourth power take-off 18.

In detail, the second differential mechanism 36 comprises a train carrier 39, which is rigidly connected to pins 38 supporting the satellites 37 in a rotary manner and is connected to the first toothed wheel 31 by means of the aforesaid gearing 60.

The satellites 37 mesh with a first toothed wheel 41 and with a second toothed wheel 42. The second toothed wheel 42 is rigidly supported by a third support shaft 43 rigidly connected to the fourth power take-off 18, whereas the first toothed wheel is rigidly carried by a fourth support shaft 44 operatively connected to the second axle 2b, for example by means of a gear 45.

In particular, the fourth support shaft 44 is carried coaxial to and around the third support shaft 43.

The train carrier 39 is rigidly connected to a fifth support shaft 46 rigidly connected to the third power take-off 17.

The gearing 60 advantageously is a parallel-shaft gearing and comprises an intermediate support shaft 61 rigidly supporting a toothed wheel 62 configured to mesh, on one side, with the first toothed wheel 31 of the first differential 26 and, on the other side, with the train carrier 39 of the second differential 36.

Advantageously, the support shaft 61 could be able to be connected to other operating elements of the vehicle, providing a fifth and sixth power take-off, as shown herein, isolated from the external environment by means of covers.

With reference to figure 3, the first support shaft 25 extends along the axis A to a smaller extent than the second support shaft 33 and the latter stretches above the second axle 2b on both sides.

As a result of this arrangement, the first and the third power take-off 15, 17 are located on the same side of the axle 2b, the fourth power take-off 18 is located on the opposite side of the axle 2b, whereas the second power take-off 16 is located substantially above the axle 2b.

The transmission 8 further comprises blocking means 50 configured to block the first and/or second differential mechanism 26, 36. In particular, the blocking means 50 are housed in the space 7.

In particular, the blocking means 50 comprise a sleeve 51, which is operated by actuator means 52 and is configured to cooperate in contact with an element of the differential 26, 36 in order to block the function thereof, i.e. to cause each element thereof to rotate at the same speed.

In the embodiment shown herein, the blocking means 50 for the first differential mechanism 36 comprise a sleeve 51, which can be moved so as to assumed a a first condition, in which it does not cooperate with the train carrier 29, and a second condition, in which it cooperates with the train carrier 29 so as to make it selectively integral to the second toothed wheel 32.

On the other hand, the blocking means 50 for the second differential mechanism 36 comprise a sleeve 51, which can be moved so as to assume a first condition, in which it does not cooperate with the train carrier 39, and a second condition, in which it cooperates with the train carrier 39 so as to make it selectively integral to the second toothed wheel 41.

The actuator means 52 shown herein advantageously are pneumatic, i.e. they comprise a compressed-air operated piston, which is held in the position of release of the differential by elastic means, which are not further described for the sake of brevity and are not shown in the drawings. In particular, the elastic means are configured to keep the sleeve 51 in the condition of non-engagement with the relative aforementioned element of the first or second differential 26, 36.

In particular, in this configuration, the first differential 26 is held in a blocked configuration by means of a blocking screw 53.

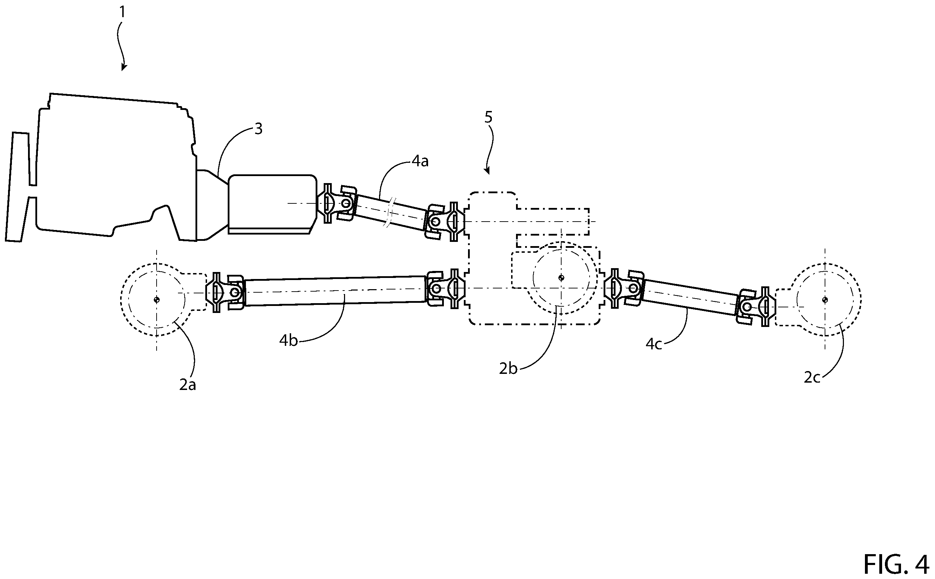

In the embodiment of figures 4, 5 and 6, the vehicle comprises three driving axles 2a, 2b and 2c. Consequently, with respect to the embodiment of figures 1, 2 and 3, the fourth power take-off 18 is connected to a third rotating shaft 4c, which connects the transmission 8 to the third axle 2c. The connection of the third rotating shaft 4c to the axle shafts of the third axle 2c can be made as described above for the second axle 2b.

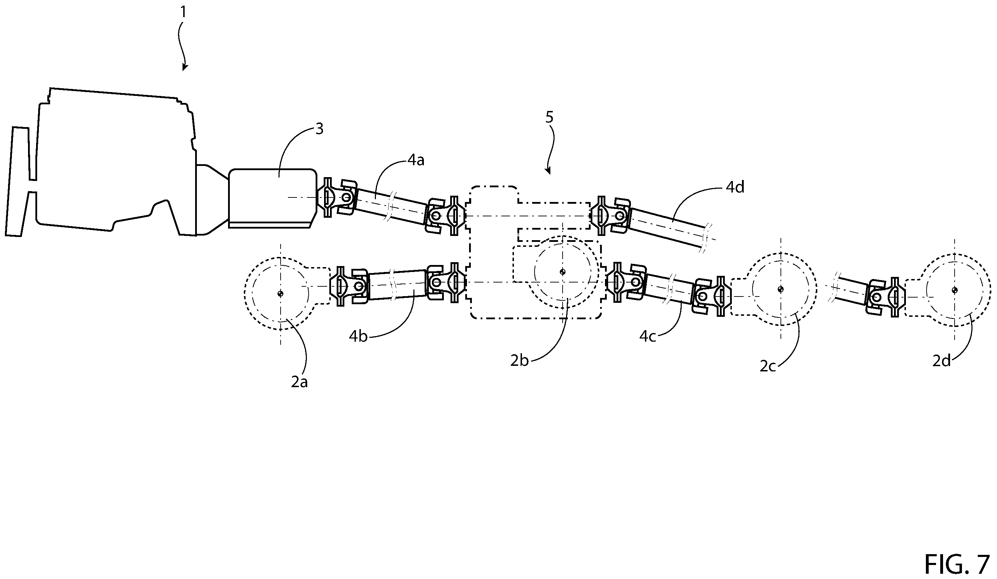

In the embodiment of figures 7, 8 and 9, the vehicle comprises four driving axles 2a, 2b, 2c and 2d. Consequently, with respect to the embodiment of figures 1, 2 and 3, the fourth power take-off 18 is connected to a third rotating shaft 4c, which connects the transmission 8 to the third axle 2c, and the second power take-off 16 is connected to a fourth rotating shaft 4d, which connects the transmission 8 to the fourth axle 2d. The connection of the third and of the fourth rotating shaft 4c, 4d to the axle shafts of the third and of the fourth axle 2c, 2d can be made as described above for the second axle 2b. In this configuration, the first differential 26 is free, i.e. it is not blocked by the screw 53 like in the previous embodiments.

The wheels described in the previous description have straight teeth and are carried by the respective shafts, as described above, in a known manner, for example by means of fitting, bushings or other forms of connection that are integral or free in their rotation. Clearly, although not expressly described, all shafts are carried by the casing in a rotary manner by means of rolling elements, such as bearings, in different mounting configurations.

The operation of the embodiments disclosed above is the following.

In the embodiment of figure 2, the torque generated by the powertrain 1 is transmitted, through the rotating shaft 4a, to the first power take-off 15 at the first support shaft 25. Here, torque is delivered to the satellites 27 by means of the pins 28 of the first differential mechanism 26, which provides torque to the toothed wheels 31 and 32. From here, through the coupling with the train carrier 39 of the second differential 36, torque is directly supplied to the fourth power take-off 18 and distributed, by means of the toothed wheels 41, 42, to the second axle 2b and to the third power take-off 17. In this case, the second and the fourth power take-off 16, 18 rotate in an idle manner and protected by the respective covers 21a, 21b, whereas the third power take-off is connected, by means of the second rotating shaft 4b, to the first axle 2a, which is a driving axle.

If necessary, the blocking means 50 can be activated for the second differential mechanism 36 so as to cause the shafts 43 and 44 to rotate at the same speed, whereas the first mechanism 26 is kept blocked by the screw 53.

In the embodiment of figure 3, the torque generated by the powertrain 1 is transmitted, through the rotating shaft 4a, to the first power take-off 15 at the first support shaft 25. Here, torque is delivered to the satellites 27 by means of the pins 28 of the first differential mechanism 26, which provides torque to the toothed wheels 31 and 32. From here, through the coupling with the train carrier 39 of the second differential 36, torque is directly supplied to the fourth power take-off 18 and distributed, by means of the toothed wheels 41, 42, to the second axle 2b and to the third power take-off 17. In this case, the second and the fourth power take-off 16, 18 rotate in an idle manner and protected by the respective covers 21a, 21b, whereas the third power take-off is connected, by means of the second rotating shaft 4b, to the first axle 2a, which is a driving axle.

If necessary, the blocking means 50 can be activated for the second differential mechanism 36 so as to cause the shafts 43 and 44 to rotate at the same speed, whereas the first mechanism 26 is kept blocked by the screw 53.

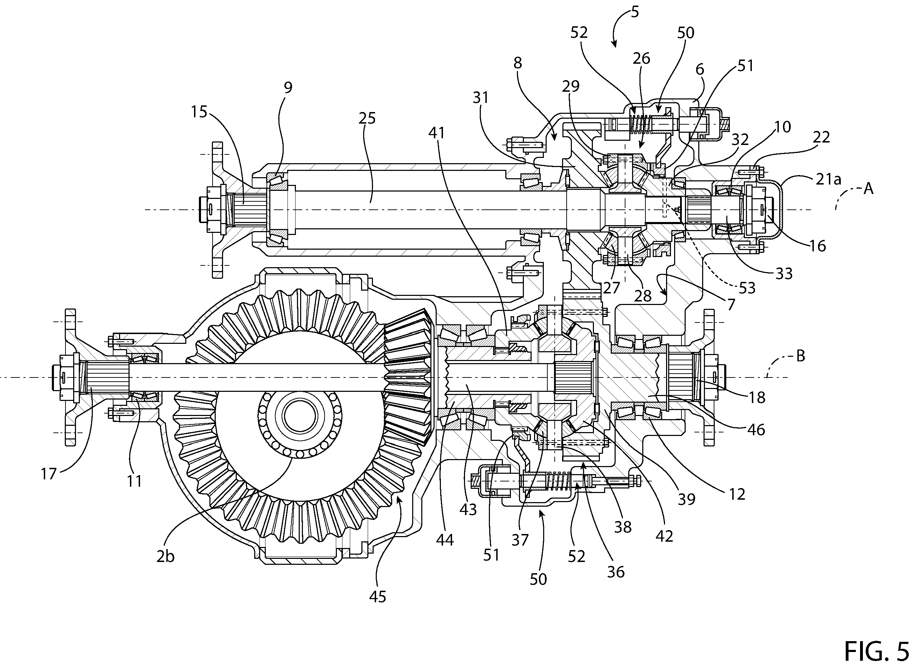

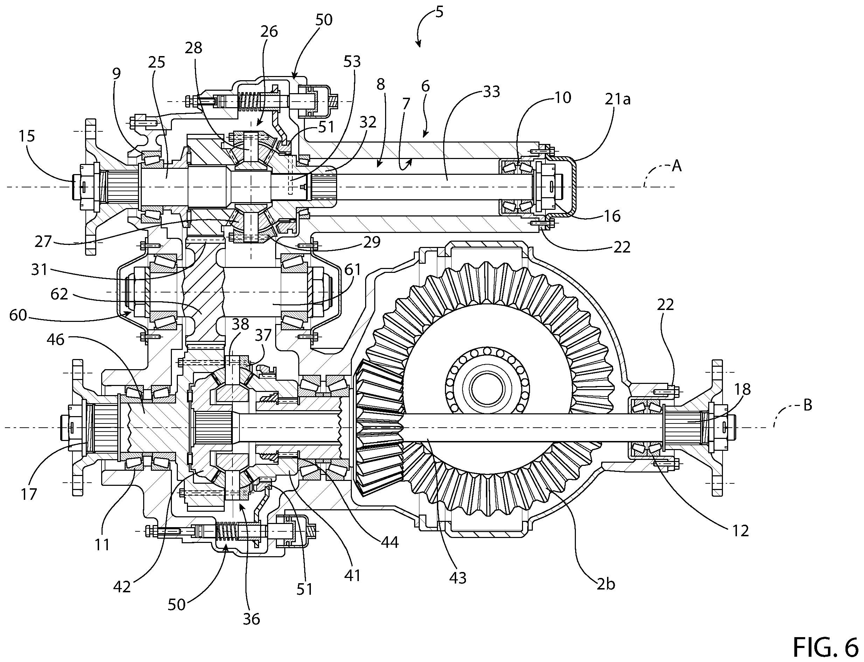

In the embodiment of figures 5 and 6, the fourth power take-off 18 is connected, by means of the third rotating shaft 4c, to a third driving axle 2c and the torque is provided, as discussed above, by the second power take-off. The operation is otherwise similar to that described in relation to figures 2 and 3.

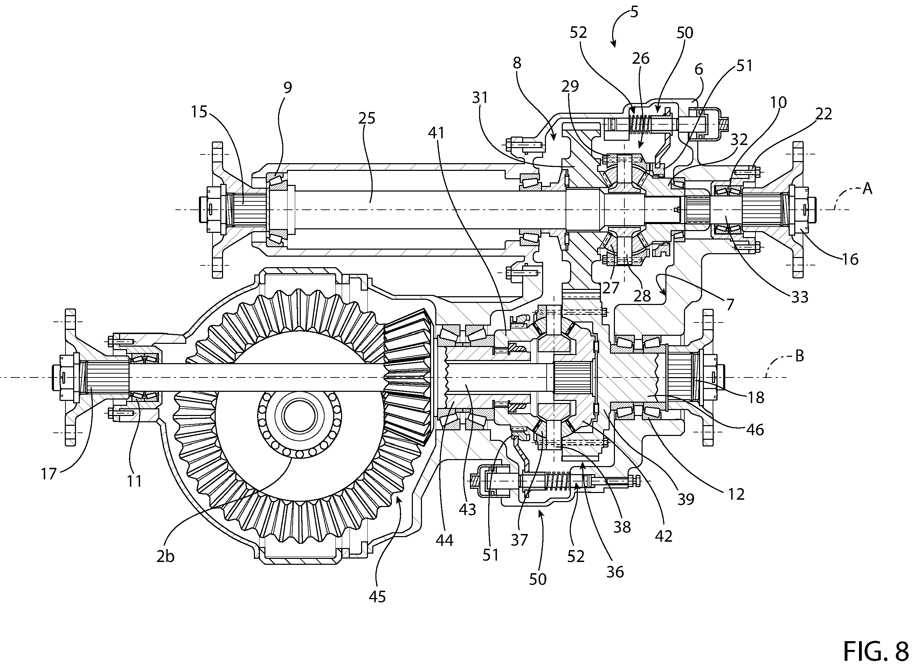

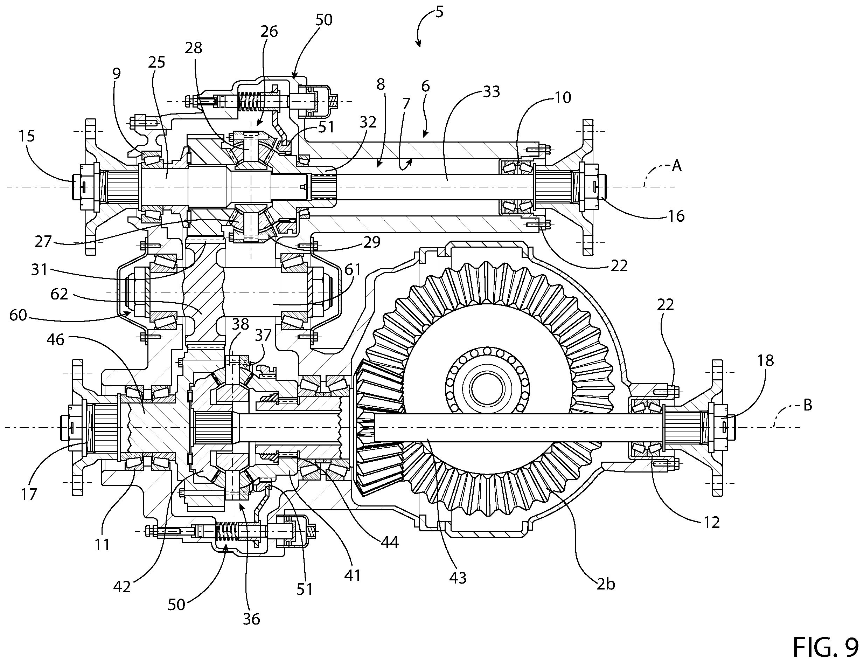

In the embodiment of figures 8 and 9, in addition to the information disclosed for figures 5 and 6, the second power take-off 16 is connected, by means of the fourth rotating shaft 4d, to a fourth driving axle 2d and the torque is provided, as discussed above, by the second power take-off. The operation is otherwise similar to that described in relation to figures 2 and 3, in particular the first differential 26, in this case, effectively distributes the torque between the wheels 31, 32.

Owing to the above, the advantages of a torque distributor system according to the invention are evident.

The distributor system disclosed herein allows for a distribution, in a versatile manner, to different axles of a vehicle, thus allowing manufacturers, with the same system, to obtain different vehicle configurations of driving axles.

Therefore, the distributor system according to the invention is particularly versatile, i.e. it is suitable for a wide variety of purposes, reducing manufacturing costs and permitting a high customisation of the vehicle.

Furthermore, the fact that the transmission is housed within a single space, and the fact that the power take-offs can be isolated when they are not used increase the useful life of the transmission.

The use of two differentials connected by one or more gears also allows manufacturers to have axles with equal traction that can be used in the conditions required by specific load and/or terrain situations.

Furthermore, the special arrangement of the shafts astride the axle interposed between the two parts of the transmission makes it possible to obtain a particularly compact distributor.

Finally, the torque distributor system according to the invention can be subjected to changes and variants, which, though, do not go beyond the scope of protection set forth in the appended claims.

Clearly, further mechanical elements can be provided, which are not described herein for the sake of brevity.

The reduction module and the differential mechanisms or the blocking means could comprise elements with a different shape.

Similarly, the arrangement of the power take-offs could change and further reduction stages could be provided between them.

Clearly, although toothed wheels with straight teeth were described, there could be different types of toothed wheels and of teeth. In addition, further constructive elements omitted from the description and merely outlined in the drawings for the sake of brevity could be present so as to allow shafts and toothed wheels to be correctly mounted.

## Claims

1. Torque distributor system (5) for distributing the torque coming from a powertrain (1) of a vehicle to a plurality of axles (2a, 2b, 2c, 2d) of said vehicle,
said distributor system (5) comprising a casing (6) suitable for defining a space (7) configured to house a transmission (8), said casing (6) defining a plurality of openings (9, 10, 11, 12) configured for housing respective power take-offs (15, 16, 17, 18) connected to each other by said transmission (8), a first power take-off (15) of said power take-offs 15, 16, 17, 18) being connectable to said powerplant (1) and at least one second (19) of said power take-offs (15, 16, 17, 18) being connectable to one or more of said axles (2a, 2b, 2c, 2d), said power take-offs (15, 16, 17, 18) being coaxial in pairs along respective axes (A, B),
said transmission (8) comprising a first differential mechanism (26) operationally interposed between said first and second power take-offs (15, 16) and a second differential mechanism (36), each respectively comprising a plurality of satellites (27, 37 ) carried by pins (28, 38) connected to a train carrier (29, 39), said satellites (27, 37) meshing with respective first and second toothed wheels (31, 32, 41, 42), said second differential mechanism (36) being operationally interposed between one of said third and fourth power take-offs (17, 18) and said first power take-off (15), said second differential mechanism (36) being operationally connected to said first gear wheel (31) of said first differential (26).

2. System according to claim 1, in which said second gear wheel (32) of said first differential (26) is rigidly connected to said second power take-off (16).

3. System according to claim 1 or 2, in which said second differential mechanism (36) is operationally interposed between said third power take-off (17) and said first power take-off (36), said fourth power take-off (18 ) being operationally connected to said toothed wheel (31).

4. System according to one of claims 1 to 3, in which said transmission (8) includes a first support shaft (25) rigidly connected to said first power take-off (15), said first support shaft (25) said pins of said first differential mechanism (26), said first gear wheel (31) being operationally connected to said train holder (39) of said second differential mechanism (36).

5. System according to claim 4, in which said train carrier (39) of said second differential mechanism (36) is rigidly connected to said fourth power take-off (18).

6. System according to claim 4 or 5, in which said first toothed wheel (41) of said second differential mechanism (36) is operationally connected to one of said axles (2b), said second toothed wheel (42) of said second differential mechanism (36) is rigidly connected to said third power take-off (17).

7. System according to claim 4, in which said train carrier (39) of said second differential mechanism (36) is rigidly connected to said third power take-off (17).

8. System according to claim 4 or 7, in which said first toothed wheel (41) of said second differential mechanism (36) is operationally connected to one of said axles (2b), said second toothed wheel (42) of said second differential mechanism (36) is rigidly connected to said fourth power take-off (18).

9. System according to one of claims 4 to 8, in which said first gear wheel (31) is operationally connected to said train carrier (39) of said second differential (36) via a gearing (60).

10. System according to claim 9, in which said gearing (60) has parallel shafts.

11. System according to claim 9 or 10, wherein said gearing (60) comprises a support shaft (61) rigidly supporting a gear wheel (62), said gear wheel (62) meshing with said first gear wheel (31) of said first differential (26) and said train carrier (39) of said second differential (36).

12. System according to one of claims 4 to 11, wherein said first differential mechanism (26) includes a locking screw (53) rigidly connecting said second gear wheel (32) to said first support shaft (25).

13. System according to one of claims 4 to 12, in which said first support shaft (25) is carried vertically above said one of said axles (2a, 2b, 2c, 2d).

14. System according to claims one of the previous claims, wherein said transmission (8) includes blocking means (50) for blocking said first and second differential mechanisms (26, 36).

15. Vehicle comprising a powerplant (1) capable of generating torque, a plurality of axles (2a, 2b, 2c, 2d) and a torque distributor (5) according to one of the previous claims and operationally interposed between said powerplant (1) and said axles (2a, 2b, 2c, 2d).
